# EUROPÄISCHE PATENTANMELDUNG

(11) **EP 1 391 335 A1**
(43) Veröffentlichungstag der Anmeldung: **25.02.2004**
(21) Anmeldenummer: 03017564.0
(22) Anmeldetag: 07.08.2003
(51) Int. Cl.: B60J 7/047, B60J 7/043

(54) **Dachmodul mit verschiebbarem Deckel und starrem Abdeckelement**

(30) Priorität: 20.08.2002 DE 10238064
(71) Anmelder: ArvinMeritor GmbH, 63128 Dietzenbach (DE)
(72) Erfinder: Boss, Christoph, 60599 Frankfurt am Main (DE); Paul, Thorsten, 55296 Lörzweiler (DE)
(74) Vertreter: Sties, Jochen, Dipl.-Ing.

(57) **Zusammenfassung**

Die Erfindung betrifft ein Dachmodul mit einer Außenhaut (22), in der ein Schlitz (28) vorgesehen ist, in den ein Halteelement (24,26) für einen Deckel (12,14) eintreten kann, der zwischen einer geschlossenen und einer geöffneten Stellung verschiebbar ist, dadurch gekennzeichnet, daß ein starres Abdeckelement (30) vorgesehen ist, das zwischen einer geschlossenen Stellung, in der es den Schlitz (28) verschließt, und einer geöffneten Stellung verschiebbar ist, in der es den Schlitz (28) für das Halteelement freigibt.

## Beschreibung

Die Erfindung betrifft ein Dachmodul mit einer Außenhaut, in der mindestens ein Schlitz vorgesehen ist, in den insbesondere ein Halteelement für einen Deckel eintreten kann, der zwischen einer geschlossenen und einer geöffneten Stellung verschiebbar ist.

Ein solches Dachmodul ist aus dem deutschen Gebrauchsmuster 298 20 613 bekannt. Der Deckel ist Teil eines Schiebedachsystems und gibt in der geöffneten Stellung eine Dachöffnung im Dachmodul frei. In der geöffneten Stellung liegt der Deckel nach Art eines Spoilers auf der Außenseite des Dachmoduls.

Damit der Deckel stabil geführt wird, ist er nicht nur an seinem in Fahrtrichtung gesehen vorderen Rand mit einem Halteelement verbunden, das in einer Führungsschiene am Dachmodul verschiebbar ist, sondern auch an seinem hinteren Rand. Damit der Deckel trotz der Tatsache, daß auch an seinem hinteren Rand ein Halteelement vorgesehen ist, ausreichend weit nach hinten verschoben werden kann und die Dachöffnung vollständig freigibt, ist der Schlitz vorgesehen, in den das Halteelement eintreten kann. Um übermäßige Windgeräusche, starken Wassereintritt und Verschmutzung zu verhindern, ist zur Abdichtung des Schlitzes eine elastisch verformbare Dichtung vorgesehen, die am Seitenrand des Schlitzes angebracht ist und von dem Halteelement lokal zur Seite gedrückt wird, wenn das Halteelement in den Schlitz eintaucht.

Der Nachteil der bekannten Konstruktion besteht darin, daß die flexible Dichtung den Schlitz nicht vollständig bündig abdeckt. Auch ist die Möglichkeit einer farblichen Anpassung der Dichtung an die Farbe des Dachmoduls stark eingeschränkt. Dies wird bei hohen Ansprüchen an die Optik unter Umständen als störend empfunden.

Die Aufgabe der Erfindung besteht darin, ein Dachmodul der eingangs genannten Art dahingehend weiterzubilden, daß auch hohe Anforderungen an die Optik eingehalten werden können.

Zu diesem Zweck ist erfindungsgemäß ein starres Abdeckelement vorgesehen, das zwischen einer geschlossenen Stellung, in der es den Schlitz verschließt, und einer geöffneten Stellung verschiebbar ist, in der es den Schlitz für den Schlitten freigibt. Ein starres Abdeckelement kann so ausgeführt werden, daß es mit den Rändern des Schlitzes bündig abschließt. Dabei kann das Abdeckelement an jeden Verlauf der Außenhaut angepaßt werden, also auch dreidimensional gekrümmt verlaufen. Da das Abdeckelement formstabil ist, bleibt die Präzision des Abschlusses mit den Rändern des Schlitzes auch über eine lange Betriebsdauer aufrechterhalten und ist keinem Verschleiß unterworfen.

Gemäß der bevorzugten Ausführungsform ist vorgesehen, daß das Abdeckelement in der geöffneten Stellung unterhalb der Außenhaut angeordnet ist, insbesondere mittels einer Kulissenführung, in der es verschiebbar ist und die unterhalb der Außenhaut angebracht ist. Dies ermöglicht es, das Abdeckelement in einfacher Weise unter die Außenhaut zu schieben, wo es weder optisch störend ist noch beispielsweise Windgeräusche hervorrufen kann.

Gemäß der bevorzugten Ausführungsform der Erfindung ist vorgesehen, daß das Abdeckelement einen Körper und eine von diesem abstehende Leiste aufweist, die in den Schlitz eingreift. Ein breiterer Körper ermöglicht es, am Abdeckelement unmittelbar zwei Wasserrinnen vorzusehen, die eventuell eintretendes Wasser sammeln und kontrolliert ableiten können.

Zur Abdichtung können an den Körper zwei Dichtungen angebracht sein, die an der Außenhaut anliegen, wenn sich das Abdeckelement in der geschlossenen Stellung befindet. Zusätzlich sind vorzugsweise an der Leiste zwei Dichtungen angebracht, die an der Außenhaut anliegen, wenn sich das Abdeckelement in der geschlossenen Stellung befindet. Wasser, das trotz der Dichtungen zwischen der Leiste und der Außenhaut nach innen eindringt, wird dann von der Wasserrinne aufgefangen. Die Dichtung zwischen dem Körper und der Außenhaut verhindert, daß das Wasser ausgehend von der Wasserrinne weiter in das Innere des Dachmoduls vordringt.

Das Abdeckelement kann aus jedem geeigneten Material bestehen, das bei geringem Gewicht die gewünschte hohe Formstabilität ermöglicht, beispielsweise Metall oder Kunststoff. Somit kann das Abdeckelement in einfacher Weise lackiert werden. Ein Abdeckelement aus Kunststoff kann auch eingefärbt werden.

Um das Abdeckelement zu verschieben, wenn der Deckel in die geöffnete Stellung verschoben wird und dessen Halteelement in den Schlitz eintritt, kann eine einfache Anlagefläche am Abdeckelement ausreichen, an der das Halteelement angreift und das Abdeckelement aus der geschlossenen in die geöffnete Stellung verschiebt. In diesem Fall ist vorzugsweise eine Feder vorgesehen, die das Abdeckelement in die geschlossene Stellung beaufschlagt, so daß das Abdeckelement beim Schließen des Deckels dessen Halteelement folgt und automatisch wieder in die geschlossene Stellung zurückkehrt. Alternativ kann vorgesehen sein, daß am Abdeckelement eine Koppelgestaltung vorgesehen ist, an der ein Mitnehmer angreifen kann, um das Abdeckelement zu verschieben. In diesem Fall würde das Abdeckelement unmittelbar vom Halteelement wieder in die geschlossene Stellung zurückgezogen.

Die Erfindung wird nachfolgend anhand einer bevorzugten Ausführungsform beschrieben, die in den beigefügten Zeichnungen dargestellt ist. In diesen zeigen:
- Figur 1 eine schematische Draufsicht auf ein erfindungsgemäßes Dachmodul mit zwei Deckeln, die sich in der geschlossenen Stellung befinden;
- Figur 2 das Dachmodul von Figur 1, wobei sich die beiden Deckel in der geöffneten Stellung befinden;
- Figur 3 eine perspektivische Ansicht des Dachmoduls von Figur 2;
- Figur 4 in vergrößertem Maßstab eine schematische Draufsicht des Bereichs IV von Figur 1;
- Figur 5 eine schematische Seitenansicht des in Figur 4 gezeigten Bereichs, wobei sich das Abdeckelement in der geschlossenen Stellung befindet;
- Figur 6 einen Schnitt entlang der Ebene VI-VI von Figur 5;
- Figur 7 eine Ansicht entsprechend derjenigen von Figur 5, wobei sich das Abdeckelement in einem geringfügig geöffneten Zustand befindet;
- Figur 8 einen Schnitt entlang der Ebene VIII-VIII von Figur 7; und
- Figur 9 eine Ansicht entsprechend derjenigen von Figur 7, wobei sich das Abdeckelement in einer weiter geöffneten Stellung befindet.

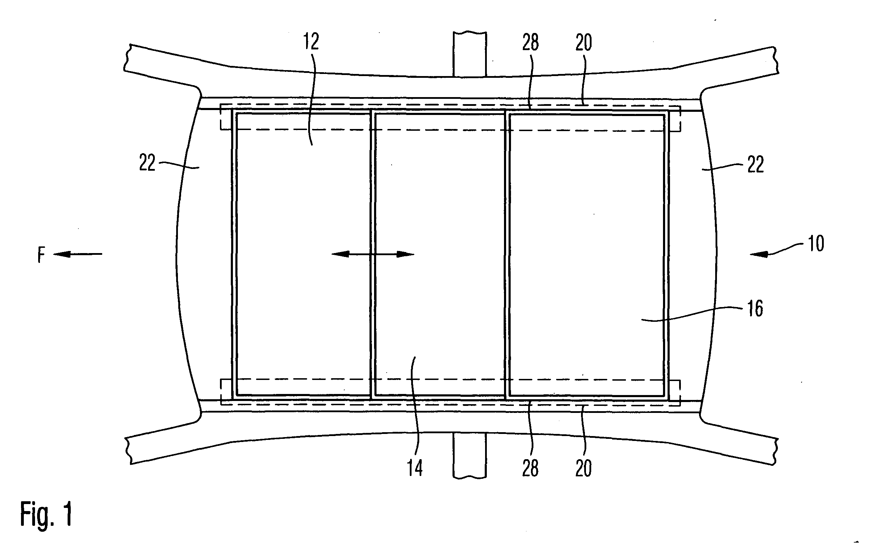

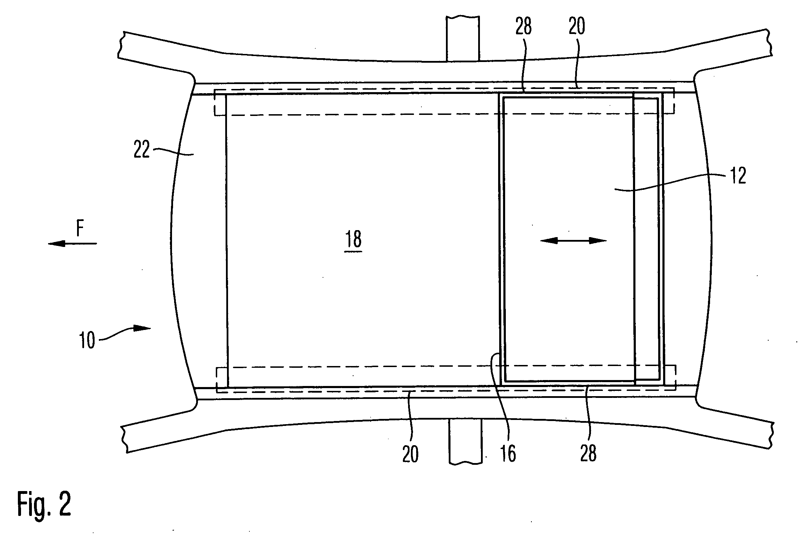

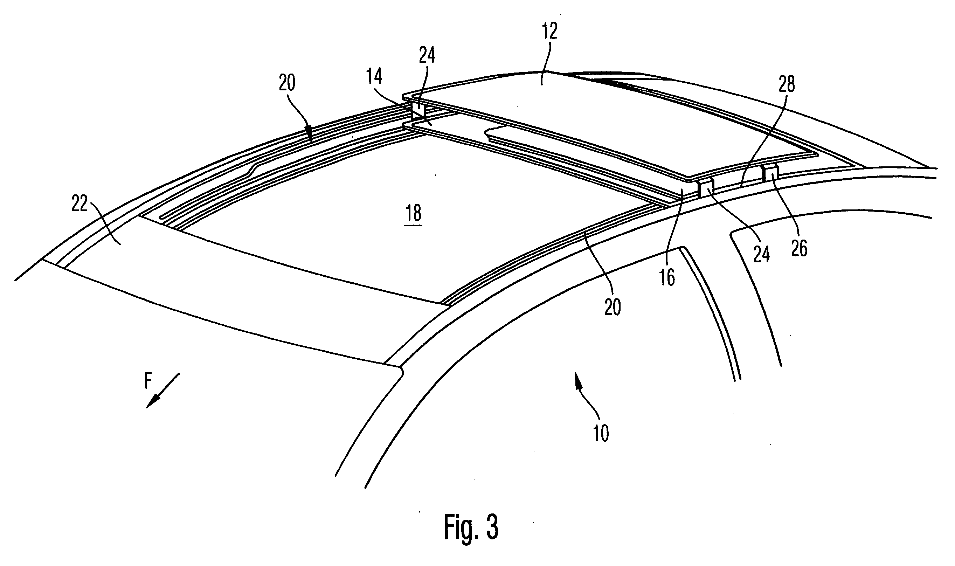

In Figur 1 ist ein Dachmodul 10 gezeigt, das einen ersten Deckel 12, einen zweiten Deckel 14 und ein feststehendes Dachelement 16 aufweist. Der erste und der zweite Deckel 12, 14 können aus der in Figur 1 gezeigten, geschlossenen Stellung, in der sie eine Dachöffnung 18 des Fahrzeugs verschließen, in eine in den Figuren 2 und 3 gezeigte, geöffnete Stellung verschoben werden, in der sie die Dachöffnung 18 freigeben. Dabei liegt der zweite Deckel 14 unterhalb des feststehenden Dachelements 16, und der erste Deckel 12 liegt oberhalb des feststehenden Dachelements 16.

Damit der erste Deckel 12 und der zweite Deckel 14 verschiebbar sind, sind am Dachmodul 10 zwei Führungsschienen 20 vorgesehen. Sie sind am Dachmodul unterhalb der Fläche angeordnet, die von einer Außenhaut 22 des Dachmoduls bestimmt ist, also von den feststehenden Außenflächen des Dachmoduls. In den Führungsschienen 20 sind verschiedene Halteelemente verschiebbar aufgenommen, an denen die beiden Deckel 12, 14 angebracht sind. Von diesen Halteelementen sind hier nur die vorderen Halteelemente 24 und die hinteren Halteelemente 26 des ersten Deckels 12 zu sehen (siehe Figur 3). Der genaue Aufbau der Führungsschienen 20 sowie die Art und Weise, wie die Halteelemente für die beiden Deckel in den Führungsschienen verstellt werden, sind für das Verständnis der Erfindung nicht relevant.

In der Außenhaut 22 des Dachmoduls, genauer gesagt entlang den Seitenrändern des feststehenden Dachelements 16, sind zwei Schlitze 28 vorgesehen. In diese Schlitze können die beiden vorderen Halteelemente 24 und die beiden hinteren Halteelemente 26 eintreten, wenn der erste Deckel 12 nach hinten in die geöffnete Stellung verschoben wird, in der sich der Deckel 12 oberhalb des feststehenden Dachelements 16 befindet.

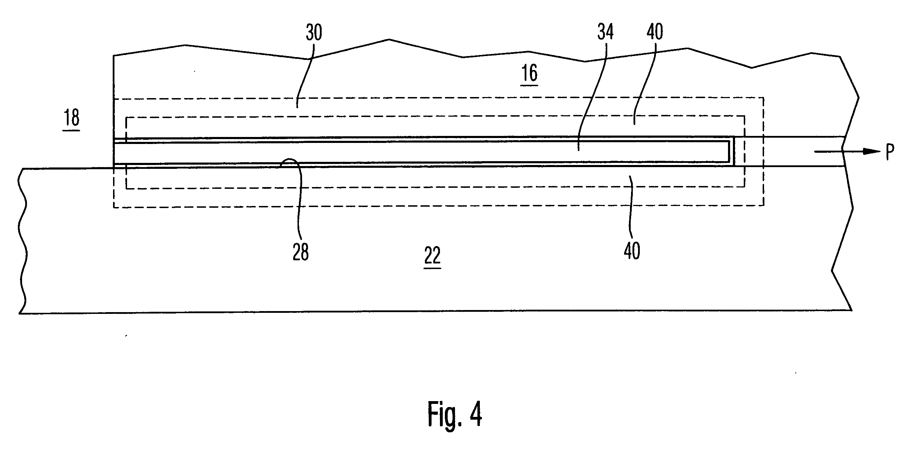

In Figur 4 ist der Schlitz 28 zu sehen, der ausgehend von der Dachöffnung 18 sich zwischen dem Dachelement 16 und dem seitlich von dieser liegenden Abschnitt der Außenhaut 22 befindet. Der Schlitz erstreckt sich so weit nach hinten, wie es für das hintere Halteelement 26 des ersten Deckels 12 erforderlich ist.

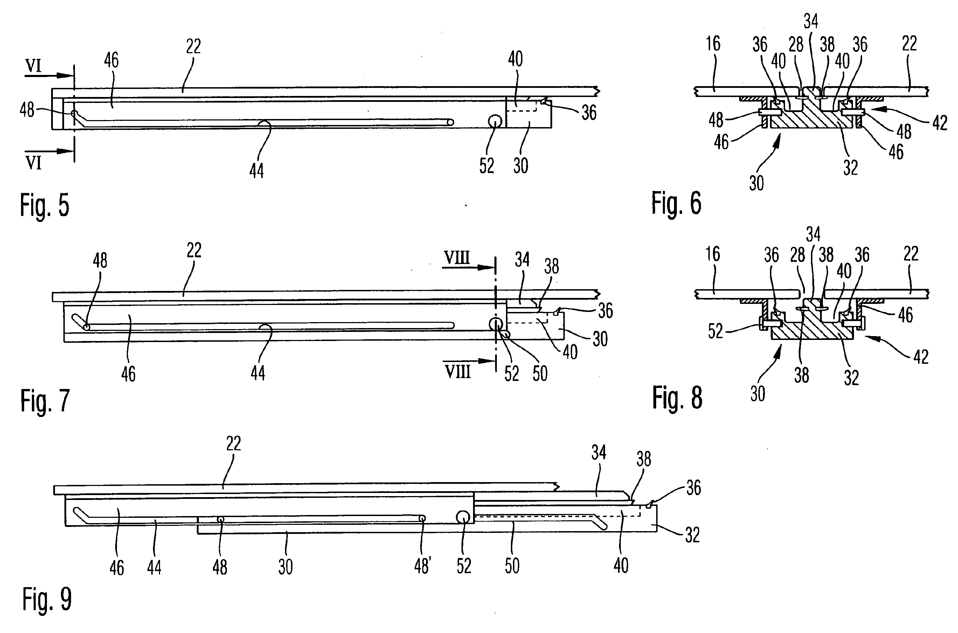

Es ist ein Abdeckelement 30 vorgesehen (siehe auch Figur 6), das aus einem im Querschnitt allgemein rechteckigen Körper 32 und einer Leiste 34 besteht, die einen ebenfalls rechteckigen Querschnitt hat und mittig von dem Körper nach oben hervorsteht. Das Abdeckelement 30 ist unterhalb der Außenhaut 22 bzw. des feststehenden Dachelementes 16 verschiebbar angebracht, und zwar zwischen einer in den Figuren 5 und 6 gezeigten geschlossenen Stellung, in der die Leiste 34 in den Schlitz 28 eingreift und auf der Außenseite des Dachmoduls bündig mit der Außenhaut abschließt, und einer geöffneten Stellung, in der das Abdeckelement 30 unter die Außenhaut 22 nach hinten, in der Richtung des Pfeils P von Figur 4, verschoben ist.

Das Abdeckelement 30 ist mit zwei Dichtungen 36 am Körper 32 und zwei Dichtungen 38 versehen, die seitlich an der Leiste 34 angebracht sind. Alternativ kann jeweils eine umlaufende Dichtung verwendet werden. Die Dichtungen 36, 38 liegen an der Unterseite der Außenhaut an, wenn sich das Abdeckelement 30 in der geschlossenen Stellung befindet. Um die Leiste herum sind zwei Wasserrinnen 40 vorgesehen, in denen Wasser gesammelt werden kann, das trotz der Dichtungen 36 durch den Spalt 28 hindurch in den Raum zwischen der Außenhaut 22 und dem Abdeckelement 30 eintritt. Alternativ kann eine einzige, umlaufende Wasserrinne verwendet werden. Es kann ein (nicht dargestellter) Ablauf vorgesehen sein, um dieses Wasser kontrolliert abzuführen.

Das Abdeckelement 30 ist unter der Außenhaut 22 durch zwei Kulissenführungen 42 verschiebbar angebracht. Jede Kulissenführung besteht zum einen aus jeweils einer ersten Kulisse 44 in zwei Montagewinkeln 46, die beiderseits des Abdeckelementes 30 auf der Unterseite der Außenhaut 22 angebracht sind. In die beiden ersten Kulissen 44 greift jeweils ein erster Kulissenbolzen 48 ein, der fest im Abdeckelement 30 angebracht ist. Die Kulissenführung 42 besteht zum anderen aus zwei zweiten Kulissen 50, die in den vertikalen Seitenwänden des Körpers 32 des Abdeckelementes 30 ausgebildet sind und in die jeweils ein zweiter Kulissenbolzen 52 eingreift, der im entsprechenden Montagewinkel 46 fest aufgenommen ist. Sowohl die erste Kulisse 44 als auch die zweite Kulisse 50 weisen in dem Bereich, in welchen der entsprechende Kulissenbolzen eingreift, wenn sich das Abdeckelement in der geschlossenen Stellung befindet, einen schräg verlaufenden Abschnitt auf, so daß das Abdeckelement 30, wenn es ausgehend von der geschlossenen Stellung in der Richtung des Pfeils P nach hinten verstellt wird, zuerst nach hinten und schräg unten unter die Ebene der Außenhaut 22 und anschließend unter der Ebene der Außenhaut 22 nach hinten verstellt wird. In Figur 9 ist eine Stellung des Abdeckelementes 30 gezeigt, in der dieses etwa um die Hälfte des maximal möglichen Weges nach hinten verstellt ist. Das Abdeckelement kann so weit verschoben werden, bis der erste Kulissenbolzen 48 in der in Figur 9 gezeigten Position 48' am Ende der ersten Kulisse angelangt ist. In dieser vollständig geöffneten Stellung ist der Schlitz 28 vollständig freigegeben, so daß die beiden Halteelemente 24, 26 frei in den Schlitz eintreten können.

Das Abdeckelement 30 kann aus der geschlossenen in die geöffnete Stellung dadurch verschoben werden, daß das hintere Halteelement 26 bzw. ein mit diesem verbundener Schlitten, der in der Führungsschiene aufgenommen ist, an einer Anlagefläche des Abdeckelementes anliegt und es unmittelbar nach hinten verschiebt. In diesem Fall ist vorzugsweise eine (nicht dargestellte) Feder vorgesehen, die das Abdeckelement 30 in die geschlossene Stellung beaufschlagt. Dies gewährleistet, daß das Abdeckelement automatisch wieder in seine geschlossene Stellung zurückkehrt, wenn das hintere Halteelement 26 den Schlitz 28 verläßt. Alternativ kann ein Mitnehmer am Halteelement vorgesehen sein, der an dem Abdeckelement 30 ankoppelt und dieses sowohl in die geöffnete Stellung nach hinten drückt als äuch wieder nach vorne in die geschlossene Stellung zieht.

## Patentansprüche

1. Dachmodul mit einer Außenhaut (22), in der ein Schlitz (28) vorgesehen ist, in den insbesondere mindestens ein Halteelement (24, 26) für einen Deckel (12, 14) eintreten kann, der zwischen einer geschlossenen und einer geöffneten Stellung verschiebbar ist, **dadurch gekennzeichnet, daß** ein starres Abdeckelement (30) vorgesehen ist, das zwischen einer geschlossenen Stellung, in der es den Schlitz (28) verschließt, und einer geöffneten Stellung verschiebbar ist, in der es den Schlitz (28) für das Halteelement freigibt.

2. Dachmodul nach Anspruch 1, **dadurch gekennzeichnet, daß** das Abdeckelement (30) in der geöffneten Stellung unterhalb der Außenhaut (22) angeordnet ist.

3. Dachmodul nach Anspruch 1 oder Anspruch 2, **dadurch gekennzeichnet, daß** das Abdeckelement (30) in einer Kulissenführung (42) verschiebbar ist, die unterhalb der Außenhaut angebracht ist.

4. Dachmodul nach einem der vorhergehenden Ansprüche, **dadurch gekennzeichnet, daß** das Abdeckelement (30) einen Körper (32) und eine von diesem abstehende Leiste (34) aufweist, die in den Schlitz (28) eingreift.

5. Dachmodul nach Anspruch 4, **dadurch gekennzeichnet, daß** der Körper mit mindestens einer Wasserrinne (40) versehen ist.

6. Dachmodul nach Anspruch 4 oder Anspruch 5, **dadurch gekennzeichnet, daß** an dem Körper (32) mindestens eine Dichtung (36) angebracht ist, die an der Außenhaut (22) anliegt, wenn sich der Abdeckelement (30) in der geschlossenen Stellung befindet.

7. Dachmodul nach einem der Ansprüche 4 bis 6, **dadurch gekennzeichnet, daß** an der Leiste (34) mindestens eine Dichtung (38) angebracht ist, die an der Außenhaut (22) anliegt, wenn sich das Abdeckelement (30) in der geschlossenen Stellung befindet.

8. Dachmodul nach einem der vorhergehenden Ansprüche, **dadurch gekennzeichnet, daß** das Abdeckelement (30) aus Metall besteht.

9. Dachmodul nach einem der Ansprüche 1 bis 7, **dadurch gekennzeichnet, daß** das Abdeckelement (30) aus Kunststoff besteht.

10. Dachmodul nach einem der vorhergehenden Ansprüche, **dadurch gekennzeichnet, daß** das Abdeckelement (30) farblich an das Dachmodul angepaßt ist.

11. Dachmodul nach einem der vorhergehenden Ansprüche, **dadurch gekennzeichnet, daß** das Abdeckelement (30) mit einer Anlagefläche versehen ist, an der beispielsweise das Halteelement für den Deckel angreifen kann, um das Abdeckelement aus der geschlossenen Stellung in die geöffnete Stellung zu verschieben.

12. Dachmodul nach Anspruch 10, **dadurch gekennzeichnet, daß** eine Feder vorgesehen ist, die das Abdeckelement (30) in die geschlossene Stellung beaufschlagt.

13. Dachmodul nach einem der Ansprüche 1 bis 9, **dadurch gekennzeichnet, daß** am Abdeckelement (30) eine Koppelgestaltung vorgesehen ist, an der ein Mitnehmer angreifen kann, um das Abdeckelement zu verschieben.
